# EUROPÄISCHE PATENTSCHRIFT

(11) **EP 3 670 948 B1**
(45) Veröffentlichungstag und Bekanntmachung des Hinweises auf die Patenterteilung: **04.08.2021**
(21) Anmeldenummer: 19217624.6
(22) Anmeldetag: 18.12.2019
(51) Int. Cl.: F16C 33/58, F16C 33/61, F16C 19/52

(54) **WÄLZLAGER MIT RADIALEM FANGRING ZUR BEGRENZUNG VON RADIALEN VERFORMUNGEN DES WÄLZLAGERS**
ROLLER BEARING WITH RADIAL RING FOR LIMITING RADIAL DEFORMATIONS OF THE ROLLING BEARING
PALIER À ROULEMENT POURVU DE BAGUE D'ARRÊT RADIALE PERMETTANT DE LIMITER LA DÉFORMATION RADIALE DU PALIER À ROULEMENT

(30) Priorität: 21.12.2018 DE 102018222789
(43) Veröffentlichungstag der Anmeldung: 24.06.2020
(73) Patentinhaber: thyssenkrupp rothe erde Germany GmbH, 44137 Dortmund (DE); thyssenkrupp AG, 45143 Essen (DE)
(72) Erfinder: Mika, Marcel, 59558 Lippstadt (DE)
(74) Vertreter: thyssenkrupp Intellectual Property GmbH

(56) Entgegenhaltungen:
- EP-A1- 0 647 732
- EP-A2- 1 016 747
- WO-A1-2010/009793
- DD-A1- 17 558
- DE-A1-102013 100 679
- DE-A1-102014 104 863
- DE-U- 1 818 279
- US-A- 2 488 825

## Beschreibung

### Stand der Technik

Die vorliegende Erfindung geht aus von einem Wälzlager mit einem Innenring und einem Außenring und mindestens einer zwischen dem Innenring und dem Außenring befindlichen Reihe von Wälzkörpern, die in dafür vorgesehenen Laufbahnen eines Laufbahnsystems laufen.

Solche Wälzlager werden je nach Verwendungszweck teilweise extremen Lasten ausgesetzt. Bei Überbelastungen der Drehverbindung eines Wälzlagers, beispielsweise durch einen mechanischen Schock, kann es unter Umständen passieren, dass sich Außenring und Innenring des Wälzlagers trennen und die Drehverbindung auseinanderfällt.

Gerade mehrreihige Drehverbindungen, wie beispielsweise das zweireihige Schrägrollendrahtlager, begrenzen eine Trennung von Innenring und Außenring in axialer Richtung durch einen Formschluss des Laufbahnsystems. Ist allerdings eine in axialer Richtung auf den Innenring oder auf den Außenring wirkende Kraft extrem groß, kann es zu einer radialen Verformung eines der Ringe kommen, so dass die Drehverbindung die Trennung der Ringe nicht mehr begrenzen kann. Im Extremfall würde das Wälzlager aufgetrennt werden.

Dies gilt insbesondere für Wälzlager, die als Drahtwälzlager ausgebildet sind. Bei Drahtwälzlagern laufen die Wälzkörper auf Laufdrähten aus gehärtetem Stahl ab. Die Lagerringe, in denen die Laufdrähte eingelegt sind, sind dagegen zur Verringerung des Gewichts üblicherweise aus Aluminium hergestellt. Diese Lagerringe sind zwar für die Belastungen im normalen Betrieb ausgelegt, verformen sich aber unter Extrembelastungen stärker, als beispielsweise Wälzlagerstahl mit gleichem Querschnitt, wodurch es zu einer Auftrennung des Wälzlagers kommen kann.

Um dies zu verhindern, wird üblicherweise das Laufbahnsystem der Drehverbindung so vergrößert, dass die zu erwartenden Kräfte nicht ausreichen, eine radiale Verformung herbeizuführen, welche groß genug ist, den Formschluss in der Drehverbindung aufzuheben. Eine weitere Möglichkeit, eine Trennung des Wälzlagers zu verhindern, wäre eine deutliche Verstärkung der Ringquerschnitte oder die Verstärkung der Schraubverbindung. Die genannten Möglichkeiten aus dem Stand der Technik haben allerdings eine wesentliche Vergrößerung des Wälzlagerquerschnitts und damit eine nachteilige deutliche Steigerung des Gewichtes und der Kosten des Wälzlagers zur Folge.

Alternativ ist es beispielsweise aus DE 10 2014 104 863 A1, DE 10 2013 100 679 A1 oder WO 2010 009 793 A1 bekannt, Wälzlager mit einer zusätzlichen Radialrollenreihe auszustatten, die zwischen sich hintergreifenden Ringfortsätzen der Wälzlagerringe angeordnet ist und so ein abschnittsweises Entfernen von Innenring und Außenring verhindert.

### Offenbarung der Erfindung

Es ist eine Aufgabe der vorliegenden Erfindung, ein Wälzlager bereitzustellen, welches gegen ein Auftrennen des Wälzlagers durch axial wirkende Kräfte gesichert ist, ohne dass dabei das Wälzlager an zusätzlichem Gewicht gewinnt.

Diese Aufgabe wird gelöst durch ein Wälzlager mit den Merkmalen des unabhängigen Anspruchs 1.

Das erfindungsgemäße Wälzlager ermöglicht es durch die Nase am ersten Ring, eine radiale Verformung des ersten Ringes und/oder des zweiten Ringes auf ein ausreichend geringes Maß zu begrenzen, so dass keine Trennung des ersten Ringes und des zweiten Ringes durch axiale Kräfte möglich ist. Weiterhin ist durch die Beabstandung der Nase zu den Wänden der Nut eine im Normalbetrieb des Wälzlagers unbeeinträchtigte Funktion des Wälzlagers möglich. Wird der erste Ring und der zweite Ring durch eine Verformung in radialer Richtung gegeneinander verschoben, so entsteht ein Formschluss der Nase mit der Nut. Dieser Formschluss verhindert eine weitere Verformung des Wälzlagers in radialer Richtung, wodurch der Formschluss im Wälzlager, welcher eine Trennung des ersten Ringes vom zweiten Ring verhindert, nicht aufgelöst wird. Zwar ist es möglich, dass nach einer extremen mechanischen Belastung das Wälzlager so deformiert ist, dass es in seiner Funktion beeinträchtigt oder gar funktionslos ist, eine Trennung des ersten Ringes vom zweiten Ring kann jedoch nicht stattfinden. Die extremen mechanischen Belastungen können beispielsweise mechanische Schocks sein. Mechanische Schocks im Sinne der vorliegenden Erfindung sind schlagartige große Belastungen. Die extremen mechanischen Belastungen können aber auch statische mechanische Belastungen oder statische oder dynamische Zugkräfte, statische oder dynamische Biege- oder Kippmomente sein. Grundsätzlich ermöglicht das erfindungsgemäße Wälzlager eine Trennung des ersten Ringes und des zweiten Ringes durch jegliche starke axiale Belastungen, welche zu einer Bewegung des ersten Lagerringes in axialer Richtung führen würden, zu verhindern.

Die Beabstandung ist so ausgebildet, dass im Normalbetrieb zwischen der Nase und der Nut ein die Nase umlaufender Spalt ausgebildet ist. Aufgrund dieses Spaltes stehen Nase und Nut im Normalbetrieb weder in direkter noch in mittelbarer Wechselwirkung zueinander. Erst im Falle einer Extrembelastung können der erste und/oder der zweite Ring so verformt werden, dass Nut und Nase in Kontakt treten und eine weitere Verformung verhindert wird. Die beiden Ringe bilden somit für den jeweils anderen Ring einen radialen Fangring zur Begrenzung von radialen Verformungen des Wälzlagers.

Axiale Richtung im Sinne der vorliegenden Erfindung ist eine Richtung parallel zur Drehachse des Wälzlagers, also eine Richtung orthogonal zur Haupterstreckungsebene des Wälzlagers. Radiale Richtung im Sinne der vorliegenden Erfindung ist eine die Drehachse des Wälzlagers schneidende Richtung parallel zur Haupterstreckungsebene des Wälzlagers und damit orthogonal zur axialen Richtung.

Vorteilhafte Ausgestaltungen und Weiterbildungen der Erfindung sind den Unteransprüchen, sowie der Beschreibung unter Bezugnahme auf die Zeichnungen entnehmbar.

Gemäß einer bevorzugten Ausführungsform der vorliegenden Erfindung ist vorgesehen, dass die Nase konzentrisch um die Drehachse umlaufend ist. Dies ermöglicht eine Verbesserung des Schutzes vor radialen Verformungen des ersten Ringes im Vergleich zu nicht umlaufenden Nasen. Alternativ ist denkbar, dass der erste Ring eine Mehrzahl von in die Nut des zweiten Ringes in axialer Richtung eingreifende Nasen aufweist. Denkbar ist etwa, dass die Nasen der Mehrzahl von Nasen gleichmäßig in Umfangsrichtung am ersten Ring verteilt angeordnet ist. Damit ist es vorteilhaft möglich, Gewicht des Wälzlagers einzusparen.

Gemäß einer weiteren bevorzugten Ausführungsform der vorliegenden Erfindung ist vorgesehen, dass der erste Ring einen ersten Teilring und einen zweiten Teilring aufweist. Dies ermöglicht eine einfache Montage des Wälzlagers. Denkbar ist, dass der erste Teilring und der zweite Teilring miteinander verschraubt sind. Denkbar ist aber auch, dass der zweite Ring einen weiteren ersten Teilring und einen weiteren zweiten Teilring aufweist.

Gemäß einer weiteren bevorzugten Ausführungsform der vorliegenden Erfindung ist vorgesehen, dass das Wälzlager eine mehrreihige Rollendrehverbindung ist. Dies ermöglicht einen zuverlässigen Betrieb des Wälzlagers auch unter hohen Belastungen. Bevorzugt ist die Rollendrehverbindung ein zweireihiges Schrägrollenlager. Das zweireihige Schrägrollenlager bietet einen stabilen Formschluss in axialer Richtung.

Gemäß einer weiteren bevorzugten Ausführungsform der vorliegenden Erfindung ist vorgesehen, dass die Nase einstückig mit dem ersten Teilring ausgebildet ist, wobei der erste Teilring in axialer Richtung eine Rollenreihe des Wälzlagers überragt. Die einstückige Verbindung der Nase am ersten Teilring mit dem ersten Teilring ermöglicht eine besonders haltbare Konstruktion und somit eine Verhinderung der Trennung der Ringe des Wälzlagers auch bei extremen mechanischen Belastungen. Mit dem in axialer Richtung eine Rollenreihe des Wälzlagers überragenden ersten Teilring ist sichergestellt, dass der Formschluss im Wälzlager tatsächlich durch den Formschluss der Nase mit der Nut erhalten bleibt. Die Nase kann ebenso einstückig mit dem zweiten Lagerring verbunden sein und in eine Nut im ersten Lagerring eingreifen.

Gemäß der vorliegenden Erfindung ist vorgesehen, dass der erste Ring ein Innenring des Wälzlagers ist und der zweite Ring ein Außenring des Wälzlagers ist. Denkbar ist aber auch, dass der erste Ring ein Außenring des Wälzlagers ist und der zweite Ring ein Innenring des Wälzlagers ist.

Gemäß einer weiteren bevorzugten Ausführungsform der vorliegenden Erfindung ist vorgesehen, dass der zweite Ring ein Mittel zum Antrieb des zweiten Ringes aufweist, wobei das Mittel vorzugsweise eine Zahnreihe ist. Dies ermöglicht eine kontrollierte Drehbewegung des Wälzlagers. Die Verwendung eines mit einer Zahnreihe verzahnten Mittels ermöglicht ein schlupffreies Drehen des Wälzlagers und ist zudem sehr stabil. Denkbar ist aber auch, dass der erste Ring ein Mittel zum Antrieb des ersten Ringes aufweist, wobei das Mittel vorzugsweise eine Zahnreihe ist.

Gemäß einer weiteren bevorzugten Ausführungsform der vorliegenden Erfindung ist vorgesehen, dass zwischen der Nase und der Oberfläche des zweiten Ringes im Bereich der Nut ein Spalt angeordnet ist, wobei an dem ersten Ring und/oder an dem zweiten Ring eine Abdichtung zum Abdichten des Spaltes angeordnet ist, wobei die Abdichtung vorzugsweise eine umlaufende Gummilippe ist. Dies ermöglicht auf vorteilhafte Weise den Schutz des Wälzlagers vor eindringenden Verschmutzungen und dadurch vor Beschädigungen. Weiterhin ermöglicht die Abdichtung, dass Fremdkörper von der Nut ferngehalten werden, was einen störungsarmen Betrieb des Wälzlagers ermöglicht. Eindringende Fremdkörper könnten sich beim Drehen des Wälzlagers in der Nut verkanten und so das Wälzlager blockieren. Dies ist damit nicht mehr möglich.

Die Erfindung findet Anwendung in einem Wälzlager, das ein Schrägrollen- oder Schrägkugellager ist. Schrägrollen- und Schrägkugellager weisen einen Druckwinkel zwischen Radialebene und Drucklinie auf, aufgrund dessen sich axiale Belastungen in wirksame Komponenten in axialer und radialer Richtung zerlegen lassen. Insbesondere weist das Schrägrollen- oder Schrägkugellager bevorzugt einen Druckwinkel im Bereich von 30° bis 60° auf.

Die Vorteile der Erfindung treten darüber hinaus in besonderem Maße bei einem Wälzlager auf, das als ein Drahtwälzlager ausgebildet ist. Drahtwälzlager enthalten Laufdrähte, auf denen die Wälzkörper des Wälzlagers ablaufen. Die Laufdrähte sind üblicherweise aus gehärtetem Stahl gefertigt und in Lagerringe eingelegt, die zur Reduzierung des Gewichts vorzugsweise aus Aluminium hergestellt sind. Aufgrund der zweiteiligen Ausbildung von Lagerring und Lagerlaufbahn in Drahtwälzlagern und auch aufgrund der üblicherweise geringeren Festigkeit und höheren Elastizität der Ringmaterialien kann es insbesondere bei Drahtwälzlagern unter hohen Lasten zu Ringverformungen kommen, die die Nase mit der Nut in Kontakt bringen und damit eine Trennung der Ringe verhindern.

Die Nase weist eine Wandstärke auf, die mindestens 50% des Durchmessers der Wälzkörper des Wälzlagers mit dem größten Durchmesser beträgt. Eine wesentliche Größe bei der Auslegung von Wälzlagern ist der Durchmesser der größten Wälzkörper, die typischerweise die höchsten Belastungen übertragen. Durch diese Bemessung der Wandstärke ist die Belastbarkeit des Nasen/Nut-Eingriffs an den Einsatzbereich des Wälzlagers angepasst. Es wird sichergestellt, dass die formschlüssige Verbindung von Nase und Nut die im Extremfall einwirkenden Radialkräfte aufnehmen kann, ohne dass ein Materialversagen, beispielsweise durch ein Abreißen der Nase, eintritt.

Ein weiterer Gegenstand der vorliegenden Erfindung zur Lösung der eingangs gestellten Aufgabe ist ein Verfahren zum Betrieb eines erfindungsgemäßen Wälzlagers mit den Merkmalen des unabhängigen Anspruchs 9. Das erfindungsgemäße Verfahren ermöglicht es, die radiale Verformung des ersten Ringes und/oder des zweiten Ringes auf ein ausreichend geringes Maß zu begrenzen, so dass keine Trennung des ersten Ringes und des zweiten Ringes durch axiale Kräfte möglich ist. Werden der erste Ring und der zweite Ring durch eine Verformung in radialer Richtung gegeneinander verschoben, so entsteht ein Formschluss der Nase mit der Nut. Dieser Formschluss verhindert eine weitere Verformung des Wälzlagers in radialer Richtung, wodurch der Formschluss des Laufbahnsystems, welcher eine Trennung des ersten Ringes vom zweiten Ring verhindert, nicht aufgelöst wird.

Ein weiterer Gegenstand der vorliegenden Erfindung zur Lösung der eingangs gestellten Aufgabe ist eine Vorrichtung aufweisend ein Wälzlager nach einem der Ansprüche 1 bis 8.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, die sich auf die vorliegenden Ansprüche beschränkt.

### Kurze Beschreibung der Zeichnungen

- Figur 1: zeigt ein schematisches Teilschnittbild eines Wälzlagers gemäß dem Stand der Technik.
- Figur 2: zeigt ein schematisches Teilschnittbild eines Wälzlagers gemäß einer beispielhaften Ausführungsform der vorliegenden Erfindung.
- Figur 3: zeigt ein schematisches Bild einer Vorrichtung gemäß einer beispielhaften Ausführungsform der vorliegenden Erfindung.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

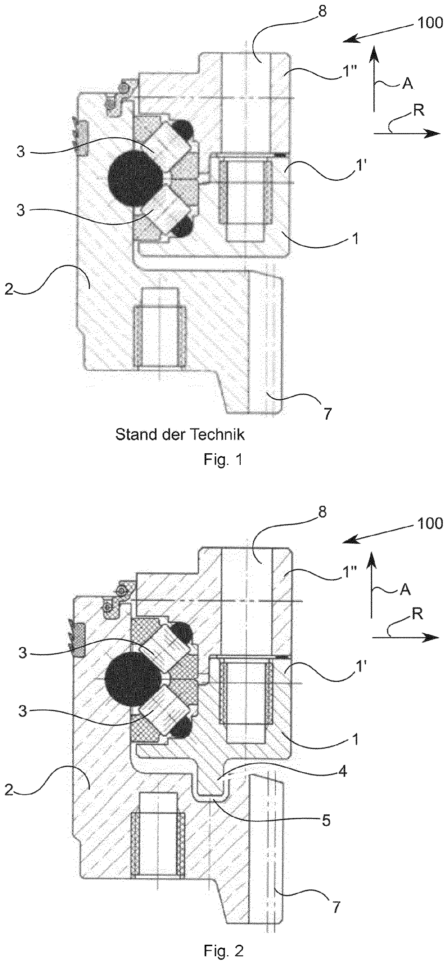

In der **Figur 1** ist ein schematisches Teilschnittbild eines Wälzlagers 100 gemäß dem Stand der Technik dargestellt. Das Wälzlager 100 weist den ersten Ring 1 und den zweiten Ring 2 auf, welche konzentrisch angeordnet und mit einem zweireihigen Rollenlager mit den Wälzkörpern 3 drehbar miteinander verbunden sind. Der erste Ring 1 ist ein geteilter Ring. Er weist den ersten Teilring 1' und den zweiten Teilring 1" auf, welche in der Bohrung 8 miteinander verschraubt sind. Dies ermöglicht eine einfache Montage des Wälzlagers 100. Der zweite Ring 2 weist das Mittel 7 zum Antrieb des Wälzlagers 100 auf. Bei normalen Betriebslasten in axialer Richtung A verhindert der Formschluss im Laufbahnsystem, dass der erste Ring 1 und der zweite Ring 2 in axialer Richtung A getrennt werden. Bei extremen Belastungen in axialer Richtung A kann es jedoch vorkommen, dass sich der erste Ring 1 in radialer Richtung R so verformt, dass der Formschluss im Laufbahnsystem nicht mehr gegeben ist. Folglich trennen sich der erste Ring 1 und der zweite Ring 2 unter dem Einwirken der Belastung in axialer Richtung A.

In der **Figur 2** ist ein schematisches Teilschnittbild eines Wälzlagers 100 gemäß einer beispielhaften Ausführungsform der vorliegenden Erfindung dargestellt. Das Wälzlager 100 weist wie das in Figur 1 gezeigte Wälzlager 100 den geteilten ersten Ring 1 mit dem ersten Teilring 1' und dem zweiten Teilring 1" und den zweiten Ring 2 auf. Der erste Ring 1 und der zweite Ring 2 sind durch zwischen ihnen abrollende Wälzkörper 3 miteinander, drehbar verbunden. Der zweite Ring 2 weist das Mittel 7 zum Antrieb des Wälzlagers 100 auf. Der erste Teilring 1' und der zweite Teilring 1" sind in der Bohrung 8 miteinander verschraubt. Im Gegensatz zu dem in Figur 1 gezeigten Wälzlager 100 weist der erste Ring 1 die Nase 4 auf, welche in die Nut 5 des zweiten Ringes 2 eingreift. Dabei ist die Nase 4 von der Oberfläche des zweiten Ringes 2 im Bereich der Nut 5 beabstandet, so dass es im Betrieb des Wälzlagers 100 zu keiner Reibung zwischen dem ersten Ring 1 und dem zweiten Ring 2 kommt. Das in Figur 2 dargestellte Wälzlager 100 ist ein Schrägrollenlager, das als Drahtwälzlager ausgebildet ist. Die Nase 4 weist eine Wandstärke auf, die größer ist als 50% des Durchmessers der Wälzkörper 3 des Wälzlagers 100. Im Falle des dargestellten Wälzlagers 100 weisen beide Wälzkörperreihen den gleichen Durchmesser auf, die somit beide als Wälzkörper mit dem größten Durchmesser im Sinne dieser Anmeldung gelten.

Bei normalen Betriebslasten in axialer Richtung A verhindert der Formschluss im Laufbahnsystem, dass der erste Ring 1 und der zweite Ring 2 in axialer Richtung A getrennt werden. Bei extremen Belastungen in axialer Richtung A verformt sich der erste Ring 1 in radialer Richtung R. Diese Verformung wird jedoch durch einen dann einsetzenden Formschluss der Nase 4 mit der Nut 5 begrenzt, was seinerseits den Formschluss im Laufbahnsystem in axialer Richtung A aufrechterhält und so verhindert, dass der erste Ring 1 und der zweite Ring 2 getrennt werden.

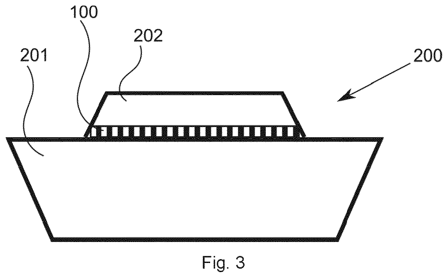

In der **Figur 3** ist ein schematisches Bild einer Vorrichtung 200 gemäß einer beispielhaften Ausführungsform der vorliegenden Erfindung gezeigt. Die Vorrichtung 200 weist das drehbare Oberteil 201 und das Unterteil 202 auf. Das Oberteil 201 und das Unterteil sind mit dem erfindungsgemäßen Wälzlager 100 verbunden.

### Bezugszeichenliste

- 1: erster Ring
- 1': erster Teilring
- 1": zweiter Teilring
- 2: zweiter Ring
- 3: Wälzkörper
- 4: Nase
- 5: Nut
- 7: Mittel zum Antrieb des zweiten Ringes
- 8: Bohrung

- 100: Wälzlager
- 200: Vorrichtung
- 201: Unterteil
- 202: Oberteil

- A: axiale Richtung
- R: radiale Richtung

## Patentansprüche

1. Wälzlager (100) aufweisend einen ersten Ring (1) und einen konzentrisch zum ersten Ring (1) angeordneten zweiten Ring (2), wobei der erste Ring (1) ein Innenring des Wälzlagers (100) und der zweite Ring (2) ein Außenring des Wälzlagers (100) ist oder der erste Ring (1) ein Außenring des Wälzlagers (100) und der zweite Ring (2) ein Innenring des Wälzlagers (100) ist, das Wälzlager (100) eine mehrreihige Drehverbindung ist, bei dem eine Trennung von Innenring und Außenring in axialer Richtung (A) durch einen Formschluss im Laufbahnsystem begrenzt ist und das Wälzlager (100) ein Schrägrollen- oder Schrägkugellager ist, in dem der erste Ring (1) und der zweite Ring (2) zueinander um eine in axialer Richtung (A) angeordnete Drehachse drehbar verbunden sind, wobei der erste Ring (1) eine in eine konzentrisch um die Drehachse umlaufende Nut (5) des zweiten Ringes (2) in axialer Richtung (A) eingreifende Nase (4) aufweist, **dadurch gekennzeichnet, dass** die Nase (4) von der Nut (5) derart beabstandet ist, dass in einem Normalbetrieb zwischen der Nase (4) und der Nut (5) ein die Nase (4) umlaufender Spalt ausgebildet ist und die Nase (4) eine Wandstärke aufweist, die größer ist als 50% des Durchmessers der Wälzkörper des Wälzlagers (100) mit dem größten Durchmesser, und bei extremen Belastungen in axialer Richtung (A) unter Verformung des ersten Rings (1) in radialer Richtung (R) ein Formschluss der Nase (4) mit der Nut (5) einsetzt, der die Verformung begrenzt und den Formschluss im Laufbahnsystem in axialer Richtung (A) aufrechterhält.

2. Wälzlager (100) nach Anspruch 1, wobei die Nase (4) konzentrisch um die Drehachse umlaufend ist.

3. Wälzlager (100) nach einem der vorhergehenden Ansprüche, wobei der erste Ring (1) mindestens einen ersten Teilring (1') und einen zweiten Teilring (1") aufweist.

4. Wälzlager (100) nach einem der vorhergehenden Ansprüche, wobei das Wälzlager (100) eine mehrreihige Rollendrehverbindung ist.

5. Wälzlager (100) nach Anspruch 4, wobei die Nase (4) einstückig mit dem ersten Teilring (1') ausgebildet ist, wobei der erste Teilring (1') in axialer Richtung (A) eine Rollenreihe des Wälzlagers (100) überragt.

6. Wälzlager (100) nach einem der vorhergehenden Ansprüche, wobei der zweite Ring (2) ein Mittel (7) zum Antrieb des Wälzlagers (100) aufweist, wobei das Mittel (7) vorzugsweise eine Zahnreihe ist.

7. Wälzlager (100) nach einem der vorhergehenden Ansprüche, wobei zwischen der Nase (4) und der Oberfläche des zweiten Ringes (2) im Bereich der Nut (5) ein Spalt angeordnet ist, wobei an dem ersten Ring (1) und/oder an dem zweiten Ring (2) eine Abdichtung zum Abdichten des Spaltes angeordnet ist, wobei die Abdichtung vorzugsweise eine umlaufende Gummilippe ist.

8. Wälzlager (100) nach einem der vorhergehenden Ansprüche, wobei das Wälzlager (100) ein Drahtwälzlager ist.

9. Verfahren zum Betrieb eines Wälzlagers (100) gemäß einem der vorhergehenden Ansprüche,
wobei von einer Bewegung des ersten Ringes (1) in axialer Richtung (A) relativ zum zweiten Ring (2) Verformungen des ersten Ringes (1) in einer zur axialen Richtung (A) orthogonalen radialen Richtung (R) hervorgerufen werden,
wobei die Verformungen des ersten Ringes (1) in radialer Richtung (R) durch einen Formschluss der Nase (4) mit der Nut (5) begrenzt werden, wobei durch die Begrenzung der Verformungen des ersten Ringes (1) in radialer Richtung (R) die Bewegung des ersten Ringes (1) in axialer Richtung (A) begrenzt wird.

10. Vorrichtung (200) aufweisend ein Wälzlager (100) nach einem der Ansprüche 1 bis 8.

## Claims

1. Rolling bearing (100) having a first ring (1) and a second ring (2), which is arranged concentrically in relation to the first ring (1), wherein the first ring (1) is an inner ring of the rolling bearing (100) and the second ring (2) is an outer ring of the rolling bearing (100) or the first ring (1) is an outer ring of the rolling bearing (100) and the second ring (2) is an inner ring of the rolling bearing (100), the rolling bearing (100) is a multi-row slewing ring, in the case of which a separation of the inner ring and outer ring in the axial direction (A) is confined by a form fit in the raceway system and the rolling bearing (100) is a tilted roller bearing or angular ball bearing, in which the first ring (1) and the second ring (2) are connected in a rotatable manner in relation to one another about an axis of rotation arranged in the axial direction (A), wherein the first ring (1) has a tongue (4), which engages in the axial direction (A) in a groove (5) of the second ring (2), said groove encircling the axis of rotation concentrically, **characterized in that** the tongue (4) is spaced apart from the groove (5) such that, during normal operation, a gap which encircles the tongue (4) is formed between the tongue (5) and the groove (5), and the tongue (4) has a wall thickness which is greater than 50% of the diameter of the rolling bodies with the largest diameter of the rolling bearing (100), and in the event of an extreme application of load in the axial direction (A), with the first ring (1) being deformed in the radial direction (R) in the process, a form fit takes effect between the tongue (4) and the groove (5) which limits the deformation and maintains the form fit in the raceway system in the axial direction (A).

2. Rolling bearing (100) according to Claim 1, wherein the tongue (4) encircles the axis of rotation concentrically.

3. Rolling bearing (100) according to one of the preceding claims, wherein the first ring (1) has at least a first sub-ring (1') and a second sub-ring (1").

4. Rolling bearing (100) according to one of the preceding claims, wherein the rolling bearing (100) is a multi-row roller-bearing slewing ring.

5. Rolling bearing (100) according to Claim 4, wherein the tongue (4) is formed in one piece with the first sub-ring (1'), wherein the first sub-ring (1') projects in the axial direction (A) beyond a row of rolling elements of the rolling bearing (100).

6. Rolling bearing (100) according to one of the preceding claims, wherein the second ring (2) has a means (7) for driving the rolling bearing (100), wherein the means (7) is preferably a row of teeth.

7. Rolling bearing (100) according to one of the preceding claims, wherein a gap is arranged between the tongue (4) and the surface of the second ring (2), in the region of the groove (5), wherein a seal for sealing the gap is arranged on the first ring (1) and/or on the second ring (2), the seal preferably being an encircling rubber lip.

8. Rolling bearing (100) according to one of the preceding claims, wherein the rolling bearing (100) is a wire-race bearing.

9. Method for operating a rolling bearing (100) according to one of the preceding claims,
wherein a movement of the first ring (1) in the axial direction (A) relative to the second ring (2) gives rise to deformation of the first ring (1) in a radial direction (R), which is orthogonal to the axial direction (A), wherein the deformation of the first ring (1) in the radial direction (R) is limited by a form fit between the tongue (4) and the groove (5), wherein the limitation of the deformation of the first ring (1) in the radial direction (R) limits the movement of the first ring (1) in the axial direction (A).

10. Apparatus (200) having a rolling bearing (100) according to one of Claims 1 to 8.

## Revendications

1. Palier à roulement (100) comprenant une première bague (1) et une deuxième bague (2) agencée concentriquement à la première bague (1), la première bague (1) étant une bague intérieure du palier à roulement (100) et la deuxième bague (2) étant une bague extérieure du palier à roulement (100) ou la première bague (1) étant une bague extérieure du palier à roulement (100) et la deuxième bague (2) étant une bague intérieure du palier à roulement (100), le palier à roulement (100) étant une liaison de rotation à plusieurs rangées, dans laquelle une séparation de la bague intérieure et de la bague extérieure dans la direction axiale (A) est limitée par un accouplement de forme dans le système de piste de déplacement et le palier à roulement (100) est un palier à rouleaux oblique ou à billes oblique, dans lequel la première bague (1) et la deuxième bague (2) sont reliées de manière rotative l'une par rapport à l'autre autour d'un axe de rotation agencé dans la direction axiale (A), la première bague (1) comprenant un bec (4) pénétrant dans la direction axiale (A) dans une rainure (5), concentrique autour de l'axe de rotation, de la deuxième bague (2), **caractérisé en ce que** le bec (4) est espacé de la rainure (5) de telle sorte qu'une fente entourant le bec (4) soit formée dans un mode d'exploitation normal entre le bec (4) et la rainure (5), et le bec (4) présente une épaisseur de paroi qui est supérieure à 50 % du diamètre des corps de roulement du palier à roulement (100) ayant le plus grand diamètre, et, en cas de sollicitations extrêmes dans la direction axiale (A) avec déformation de la première bague (1) dans la direction radiale (R), un accouplement de forme du bec (4) avec la rainure (5) se met en place, qui limite la déformation et maintient l'accouplement de forme dans le système de piste de déplacement dans la direction axiale (A).

2. Palier à roulement (100) selon la revendication 1, dans lequel le bec (4) est concentrique autour de l'axe de rotation.

3. Palier à roulement (100) selon l'une quelconque des revendications précédentes, dans lequel la première bague (1) comprend au moins une première bague partielle (1') et une deuxième bague partielle (1").

4. Palier à roulement (100) selon l'une quelconque des revendications précédentes, dans lequel le palier à roulement (100) est une liaison de rotation à rouleaux à plusieurs rangées.

5. Palier à roulement (100) selon la revendication 4, dans lequel le bec (4) est formé d'un seul tenant avec la première bague partielle (1'), la première bague partielle (1') dépassant une rangée de rouleaux du palier à roulement (100) dans la direction axiale (A).

6. Palier à roulement (100) selon l'une quelconque des revendications précédentes, dans lequel la deuxième bague (2) comprend un moyen (7) pour l'entraînement du palier à roulement (100), le moyen (7) étant de préférence une rangée de dents.

7. Palier à roulement (100) selon l'une quelconque des revendications précédentes, dans lequel une fente est agencée entre le bec (4) et la surface de la deuxième bague (2) dans la zone de la rainure (5), un joint d'étanchéité étant agencé au niveau de la première bague (1) et/ou au niveau de la deuxième bague (2) pour l'étanchéification de la fente, le joint d'étanchéité étant de préférence une lèvre en caoutchouc circonférentielle.

8. Palier à roulement (100) selon l'une quelconque des revendications précédentes, dans lequel le palier à roulement (100) est un palier à roulement à fils.

9. Procédé d'exploitation d'un palier à roulement (100) selon l'une quelconque des revendications précédentes,
dans lequel des déformations de la première bague (1) dans une direction radiale (R) orthogonale à la direction axiale (A) sont provoquées par un mouvement de la première bague (1) dans la direction axiale (A) par rapport à la deuxième bague (2),
dans lequel les déformations de la première bague (1) dans la direction radiale (R) sont limitées par un accouplement de forme du bec (4) avec la rainure (5), dans lequel le mouvement de la première bague (1) dans la direction axiale (A) est limité par la limitation des déformations de la première bague (1) dans la direction radiale (R).

10. Dispositif (200) comprenant un palier à roulement (100) selon l'une quelconque des revendications 1 à 8.
